# EUROPEAN PATENT SPECIFICATION

(11) **EP 3 885 205 B1**
(45) Date of publication and mention of the grant of the patent: **07.06.2023**
(21) Application number: 20806546.6
(22) Date of filing: 02.04.2020
(51) Int. Cl.: B60R 25/20, B60R 25/04, B60R 25/01, B60R 25/24

(54) **CAR KEY CONTROL METHOD AND APPARATUS**
VERFAHREN UND VORRICHTUNG ZUR FAHRZEUGSCHLÜSSELSTEUERUNG
PROCÉDÉ ET APPAREIL DE COMMANDE DE CLÉ DE VOITURE

(30) Priority: 16.05.2019 CN 201910410326
(43) Date of publication of application: 29.09.2021
(73) Proprietor: Guangzhou Xiaopeng Autopilot Technology Co., Ltd., Guangzhou, Guangdong 510640 (CN)
(72) Inventor: LIU, Yilin, Guangzhou, Guangdong 510640 (CN); LI, Xiangrong, Guangzhou, Guangdong 510640 (CN); LU, Yuzhe, Guangzhou, Guangdong 510640 (CN); HE, Guangbo, Guangzhou, Guangdong 510640 (CN); ZHOU, Bo, Guangzhou, Guangdong 510640 (CN)
(74) Representative: Treeby, Philip David William
(86) International application number: PCT/CN2020/083064
(87) International publication number: WO 2020/228442

(56) References cited:
- CN-A- 107 393 079
- CN-A- 109 391 470
- CN-A- 110 103 883
- US-A1- 2013 317 693
- US-A1- 2017 001 598
- US-A1- 2018 009 416
- US-A1- 2019 106 084
- US-A1- 2021 146 885
- US-B1- 10 081 334

## Description

### Field of Invention

The present invention relates to the field of automobiles and, in particular, to a control method and apparatus for vehicle keys.

### Background

With the development of science and technology, automobiles have become an indispensable means for transportation in people's daily life. Keys must be used for operations of automobiles such as opening/locking doors, starting/closing the engine, etc. There are mechanical keys, integrated remote control key, etc.

Mechanical keys, also known as blade keys, can only be used for basic operations, such as door opening and locking, etc. Mechanical keys have limited functions, are inconvenient to carry, and are passive devices of poor security levels.

An integrated remote-control key is composed of a blade key and a chip key. Chip keys are added to make up for the anti-theft shortcomings of blade keys. Integrated remote-control keys have additional functions such as vehicle horn buzzing. However, such integrated remote-control keys also have limited functions and are often bulky to carry around, etc.

The disclosure of WO 2019/058900 A1 is hereby acknowledged. It discusses a car sharing system that comprises: a car sharing device which communicates with an electronic key system via ID verification and causes an onboard device to start when a user performs an operation on the onboard device subsequent to successful authentication wherein key data is authenticated through wireless communication with a mobile terminal in which key data is registered, thereby enabling the terminal to act as a vehicle key for a car-share vehicle; a radio wave ascertainment unit which, in the event of the onboard device being operated by means of the mobile terminal, ascertains the transmission radio waves transmitted from the electronic key system in a mode corresponding to the state of the vehicle power supply when a key control request in response to the operation on the mobile terminal is sent from the mobile terminal to the car sharing device and the car sharing device causes the electronic key system to operate; and an alert control unit which alerts the user to the failure to turn off the vehicle power supply on the basis of the ascertainment result from the radio wave ascertainment unit.

### Summary of Invention

In view of the above-mentioned problems, a control method and apparatus for vehicle keys that solve or at least partially solve the above-mentioned problems are proposed, as set out below.

A control method for a vehicle key, wherein the method relates to a user terminal, a vehicle terminal, and a service provider platform, the user terminal is deployed with a first application corresponding to the service provider platform, and the method comprises:
upon receipt of a permission control request sent by the first application, determining a key identifier corresponding to the permission control request and second permission information corresponding to the key identifier, wherein first permission information corresponding to the key identifier is stored in a whitelist of an NFC security module of the vehicle terminal;
generating a permission control instruction based on the key identifier and the second permission information; and
sending the permission control instruction to the vehicle terminal to use the second permission information to update the first permission information in the NFC security module of the vehicle terminal, wherein using the second permission information to update the first permission information comprises finding the first permission information in token information corresponding to the key identifier in the whitelist of the NFC security module and replacing the first permission information in the token information with the second permission information.

Optionally, the step determining a key identifier corresponding to the permission control request comprises:
determining a key number from the permission control request; and
searching for a key identifier corresponding to the key number in a pre-stored list of key information.

Optionally, the vehicle key includes an NFC virtual key, and the key identifier corresponds to an NFC virtual key, the method further comprising:
receiving a virtual key sharing request sent by the first application for a receiving terminal;
determining first key information corresponding to the virtual key sharing request and a vehicle identification number corresponding to the vehicle terminal, and generating a first service secret key corresponding to the first key information and the vehicle identification number, wherein the first secret key information includes a first key identifier;
generating first secret key information corresponding to the first key identifier and the first service secret key, wherein the first secret key information includes the first permission information; and
sending the first secret key information to the vehicle terminal to be synchronized to a whitelist of the NFC security module in the vehicle terminal, and writing the first service secret key into the NFC encryption chip of the receiving terminal.

Optionally, the method further relates to a secure element issuer platform, and the receiving terminal is deployed with a second application corresponding to the service provider platform and a third application corresponding to the secure element issuer platform;
the virtual key sharing request is a request generated by the first application based on a selected NFC virtual key and/or an entered vehicle identification number, and entered receiving terminal information; and
the step of writing the first service secret key into the NFC encryption chip of the receiving terminal includes:
   writing the first service secret key into the NFC encryption chip of the receiving terminal via the secure element issuer platform and the third application.

Optionally, the step of determining the first key information corresponding to the virtual key sharing request comprises:
generating the first key identifier corresponding to the receiving terminal, and writing the first key identifier into the NFC encryption chip of the receiving terminal via the secure element issuer platform and the third application; and
in response to the virtual key sharing request, acquiring the first key identifier corresponding to the receiving terminal via the second application.

Optionally, the vehicle key includes an NFC physical key, and the key identifier corresponds to an NFC physical key, and the method further comprises:
receiving a second secret key generation request sent by a read-write client, wherein the second secret key generation request includes second key information corresponding to the NFC physical key and the vehicle identification number corresponding to the vehicle terminal;
generating a second service secret key corresponding to the second key information and the vehicle identification number, wherein the second key information includes a second key identifier corresponding to the NFC physical key;
assembling the second key identifier and the second service secret key into an encryption instruction, and sending the encryption instruction to the read-write client to write the encryption instruction into the NFC physical key via the read-write client; and
generating second secret key information corresponding to the second key identifier and the second service secret key and sending the second secret key information to the vehicle terminal to be synchronized to the whitelist of the NFC security module in the vehicle, wherein the second secret key information includes the first permission information.

Optionally, the second permission information includes one or more of the following:
unlock vehicle permission, lock vehicle permission, start vehicle permission, DC charging permission, AC charging permission, autonomous driving on permission, autonomous driving off permission, assisted driving on permission, and assisted driving off permission.

A control apparatus for a vehicle key, wherein the apparatus interacts with a user terminal, a vehicle terminal, and a service provider platform, the user terminal is deployed with a first application corresponding to the service provider platform, and the apparatus includes:
a permission information determining module configured to, upon receipt of a permission control request sent by the first application, determine a key identifier corresponding to the permission control request and second permission information corresponding to the key identifier, wherein first permission information corresponding to the key identifier is stored in a whitelist of an NFC security module of the vehicle terminal;
a permission control instruction organization module, configured to generate a permission control instruction based on the key identifier and the second permission information; and
a permission update module, configured to send the permission control instruction to the vehicle terminal to use the second permission information to update the first permission information in the NFC security module of the vehicle terminal, wherein using the second permission information to update the first permission information comprises finding the first permission information in token information corresponding to the key identifier in the whitelist of the NFC security module and replacing the first permission information in the token information with the second permission information.

Optionally, the permission information determining module comprises:
a key number determining sub-module, configured to determine a key number from the permission control request; and
a key identifier finding sub-module, configured to search for a key identifier corresponding to the key number in a pre-stored list of key information.

Optionally, the vehicle key includes an NFC virtual key, and the key identifier corresponds to an NFC virtual key, and the apparatus further comprises:
a virtual key sharing request receiving module, configured to receive a virtual key sharing request sent by the first application for a receiving terminal;
a first service secret key generation module, configured to determine first key information corresponding to the virtual key sharing request and a vehicle identification number corresponding to the vehicle terminal, and to generate a first service secret key corresponding to the first key information and the vehicle identification number, wherein the first secret key information includes a first key identifier;
a first secret key information generating module, configured to generate first secret key information corresponding to the first key identifier and the first service secret key, wherein the first secret key information includes the first permission information; and
a first key activation module, configured to send the first secret key information to the vehicle terminal to be synchronized to a whitelist of the NFC security module in the vehicle terminal, and to write the first service secret key into the NFC encryption chip of the receiving terminal.

Optionally, the apparatus further interacts with a secure element issuer platform, and the receiving terminal is deployed with a second application corresponding to the service provider platform and a third application corresponding to the secure element issuer platform;
the virtual key sharing request is a request generated by the first application based on a selected NFC virtual key and/or an entered vehicle identification number, and entered receiving terminal information; and
the first key activation module includes:
   a first service secret key writing sub-module, configured to write the first service secret key into the NFC encryption chip of the receiving terminal through the secure element issuer platform and the third application.

Optionally, the first service secret key generation module comprises:
a first key identifier writing sub-module, configured to generate the first key identifier corresponding to the receiving terminal, and to write the first key identifier into the NFC encryption chip of the receiving terminal via the secure element issuer platform and the third application; and
a first key identifier acquiring sub-module, configured to acquire the first key identifier corresponding to the receiving terminal via the second application in response to the virtual key sharing request.

Optionally, the vehicle key includes an NFC physical key, and the key identifier corresponds to an NFC physical key, the apparatus further comprises:
a second secret key generation request receiving module, configured to receive a second secret key generation request sent by a read-write client, wherein the second secret key generation request includes second key information corresponding to the NFC physical key and the vehicle identification number corresponding to the vehicle terminal;
a second service secret key generation module, configured to generate a second service secret key corresponding to the second key information and the vehicle identification number, wherein the second key information includes a second key identifier corresponding to the NFC physical key;
an encryption instruction sending module, configured to assemble the second key identifier and the second service secret key into an encryption instruction, and send the encryption instruction to the read-write client to write the encryption instruction into the NFC physical key via the read-write client; and
a second key activation module, configured to generate second secret key information corresponding to the second key identifier and the second service secret key and send the second secret key information to the vehicle terminal to be synchronized to the whitelist of the NFC security module in the vehicle, wherein the second secret key information includes the first permission information.

Optionally, the second permission information comprises one or more of the following:
unlock vehicle permission, lock vehicle permission, start vehicle permission, DC charging permission, AC charging permission, autonomous driving on permission, autonomous driving off permission, assisted driving on permission, and assisted driving off permission.

A vehicle, comprising a processor, a memory device, and executable computer program stored on the memory device, wherein the computer program, when executed by the processor, results in performance of the control method for vehicle keys described above.

A computer-readable storage medium, storing a computer program thereon which, when executed by the processor, results in performance of the control method for vehicle keys described above.

The embodiments of this application have the following advantages:
In the embodiment of the present invention, by determining a key identifier corresponding to a permission control request and second permission information corresponding to the key identifier upon receipt of a permission control request sent by a first application, first permission information corresponding to the key identifier stored in an NFC security module of the vehicle terminal, generating a permission control instruction based on the key identifier and the second permission information, and sending the permission control instruction to the vehicle terminal to use the second permission information to update the first permission information in the NFC security module of the vehicle terminal, the invention implements permission control for vehicle keys, ensures compatibility of physical keys and virtual keys, and improves security of vehicle keys.

### Brief Description of the Drawings

In order to clearly illustrate the technical solutions in the embodiments of the present invention, brief description of the drawings pertinent to the embodiments will be provided. It should be apparent to a skilled person in the art that the drawings described below are for the purpose of illustrating embodiments of the invention only. The skilled person will be able to devise further drawings based on the provided drawings without exercising any inventive efforts.
Fig. 1 is a flowchart of the steps of a control method for vehicle keys in accordance with an embodiment of the present invention;
Figure 2 is a schematic structural diagram of a vehicle key control system provided in accordance with an embodiment of the present invention;
FIG. 3 is a flowchart of the steps of another control method for vehicle keys in accordance with an embodiment of the present invention;
FIG. 4 is a flowchart of the steps of another control method for vehicle keys in accordance with an embodiment of the present invention;
Fig. 5 is a schematic structural diagram of a vehicle key control apparatus in accordance with an embodiment of the present invention.

### Detailed Description

The technical solutions in the embodiments of the invention will now be described clearly and completely with reference to the accompanying drawings. The described embodiments merely show some but not all possible ways for implementing the invention. All other embodiments that persons of ordinary skills in the art could derive without inventive efforts fall within the scope of the disclosure.

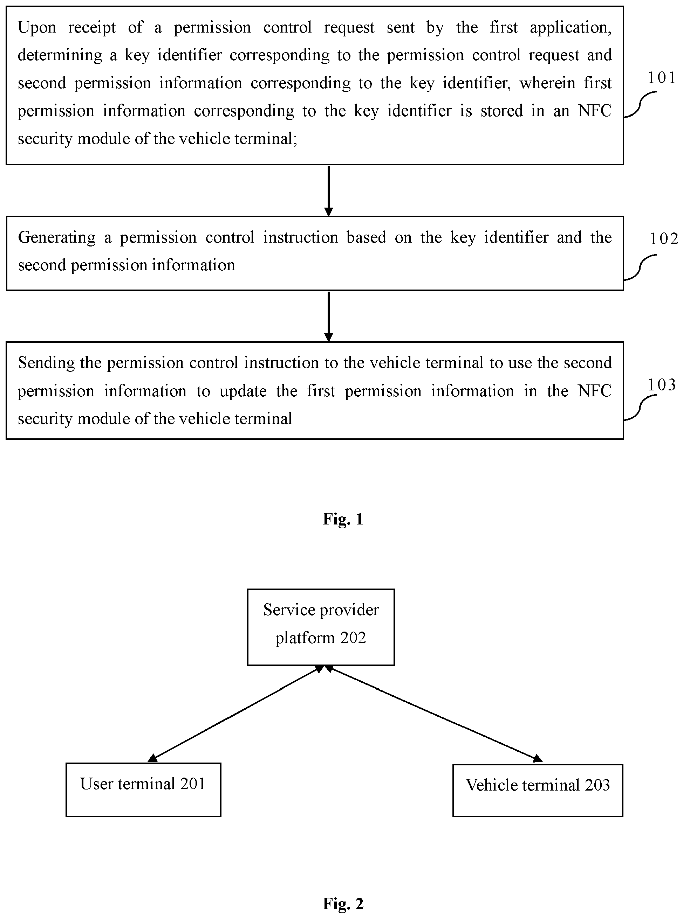

Reference is made to Fig 1, which is a flowchart of a control method for vehicle keys in accordance with an embodiment of the present invention. The method may involve a user terminal, a vehicle terminal, and a service provider (SP) platform.

As shown in FIG. 2, the user terminal 201 can communicate with the service provider platform 202, and the service provider platform 202 can communicate with the vehicle terminal 203.

The user terminal may be deployed with a first application corresponding to the service provider platform. For example, the first application may be a vehicle management application, and the user terminal may be a terminal that supports NFC (Near Field Communication) functions, such as mobile phones and smart watches, etc. The user terminal may have an NFC encryption chip, which may be an embedded secure element (eSE, Embedded Secure Element).

The vehicle terminal is provided on a vehicle and may have an NFC security module. The NFC security module can be used as the vehicle's lock core and may have a security element (SE) integrated in it. The NFC security module may be communicatively connected with an NFC sensor installed on the vehicle and a communication module. The NFC security module can communicate with a service provider platform through the communication module. When a key is close to the NFC sensor, the NFC sensor can read data from the key, and perform verification with the data stored in NFC security module.

The service provider platform can communicate with the vehicle terminal and is equipped with a Trusted Service Management (SP TSM) server.

Specifically, the method may include the following steps:
Step 101: upon receipt of a permission control request sent by the first application, determining a key identifier corresponding to the permission control request and second permission information corresponding to the key identifier, wherein first permission information corresponding to the key identifier is stored in an NFC security module of the vehicle terminal;

Wherein, the second permission information may include any one or more of the following:
unlock vehicle permission, lock vehicle permission, start vehicle permission, DC charging permission, AC charging permission, autonomous driving on permission, autonomous driving off permission, assisted driving on permission, and assisted driving off permission.

For example, in a scenario where a car owner lends his/her car to an elder person, but the elder person is not familiar with intelligent functions of the car. For the sake of safety, the second permission information can be configured by adding a disabling self-driving instruction to the token information. Then even if the elder person unlocks and drives the car, he/she would not be able to activate self-driving function using pushing buttons or the central control screen.

After activating the vehicle key, first permission information, such as activating unlock vehicle permission, activating lock vehicle permission, and activating start vehicle permission, can be stored in the whitelist of the NFC security module of the vehicle terminal,

On the first application side, a user can be shown with the permission control page. The user can select permission options, such as activating unlock vehicle permission, activating lock vehicle permission, and deactivating start vehicle permission, and then obtain the second permission information. A permission control request can then be generated and sent to the service provider platform.

After receiving a permission control request, the service provider platform can determine the key identifier corresponding to the permission control request and extract the second permission information from the permission control request.

In an embodiment of the present invention, the step of determining the key identifier corresponding to the permission control request may include the following sub-steps:
determining a key number from the permission control request; and
searching for a key identifier corresponding to the key number in a pre-stored list of key information.

In a specific implementation, the permission control request may include the unique key number of the vehicle key. Since the key information is stored in the service provider platform in advance, the key identifier corresponding to the key number in the permission control request can be found from the key information list.

Of course, the permission control request can also carry the key identifier directly, and in such case, the key identifier can be determined directly from the permission control request without searching on the platform.

Step 102: generating a permission control instruction based on the key identifier and the second permission information.

After the key identifier and the second permission information have been determined, the key identifier and the second permission information can be assembled into the permission control instruction using a protocol negotiated in advance with the vehicle terminal.

Step 103: sending the permission control instruction to the vehicle terminal to use the second permission information to update the first permission information in the NFC security module of the vehicle terminal.

When the vehicle terminal is online, the permission control instruction can be sent to the vehicle terminal. After receiving the permission control instruction, the vehicle terminal can find the first permission information in the token information corresponding to the key identifier in the whitelist of the NFC security module and complete permission update by replacing the first permission information in the token information with the second permission information.

If the vehicle terminal is offline, update of the second permission information to the vehicle terminal can wait until the vehicle terminal is back online.

After the permission information is updated, when an NFC physical key is close to the vehicle terminal, the two can perform near field communication, and the NFC physical key can be verified by the vehicle terminal. If the verification is successful, operations corresponding to the second permission information can be performed on the vehicle terminal. The verification process is as follows:
1) Verify that the key identifier corresponding to the NFC physical key is on the whitelist;
2) Verify that the token information corresponding to the key identifier in the whitelist is valid;
3) Conduct random number response challenge using a temporary session secret key to verify the service secret key.

If the key identifier is on the whitelist, the token information is valid, and the service secret key verification is successful, it is determined that the vehicle terminal has verified the NFC physical key, and the operations corresponding to the second permission information can be performed on the vehicle terminal.

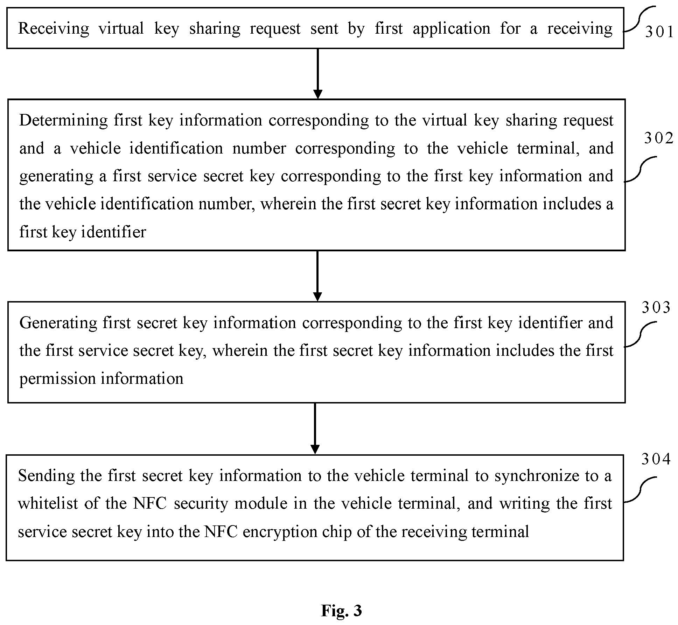

In an embodiment of the present invention, the vehicle key includes an NFC virtual key, and the key identifier may correspond to the NFC virtual key, as shown in Figure 3. The method may also include, before performing permission update, the following steps:
Step 301: receive a virtual key sharing request sent by the first application for a receiving terminal, wherein the virtual key sharing request is a request generated by the first application based on a selected NFC virtual key, and/or an entered vehicle identification number, and entered receiving terminal information.

A vehicle owner's NFC virtual key can have full permissions and can be used to control permissions granted to NFC virtual keys shared with others. Before permission update, a user can input information, such as a mobile phone number, of the receiving terminal that requests a virtual key to be shared in the first application, and can select an NFC virtual key to be shared with the receiving terminal and/or enter a vehicle identification number of a vehicle for which an NFC virtual key is to be shared, and then generate a virtual key sharing request and send that to the service provider platform.

Step 302: determining first key information corresponding to the virtual key sharing request and a vehicle identification number corresponding to the vehicle terminal, and generating a first service secret key corresponding to the first key information and the vehicle identification number, wherein the first secret key information includes a first key identifier.

After receiving the virtual key sharing request, the service provider platform can determine the first key information corresponding to the virtual key sharing request and the vehicle identification number corresponding to the vehicle.

In an embodiment of the present invention, the step of determining the first key information corresponding to the virtual key sharing request may include the following sub-steps:
generating the first key identifier corresponding to the receiving terminal, and writing the first key identifier into the NFC encryption chip of the receiving terminal via the secure element issuer platform and the third application; and
in response to the virtual key sharing request, acquiring the first key identifier corresponding to the receiving terminal via the second application.

Specifically, the receiving terminal may be deployed with a second application corresponding to the service provider platform, such as a vehicle management application, and a third application corresponding to the secure element issuer platform, such as a wallet system application. The service provider platform can generate the first key identifier corresponding to the receiving terminal, which is issued by the TSM server of the service provider platform to the third application via the TSM server of the secure element issuer platform, and then written onto the NFC encryption chip of the receiving terminal.

When the user of the receiving terminal receives a virtual key sharing notice sent by the service provider platform, such as a notice via SMS, the second application in the receiving terminal can be launched, and the second application can obtain the first key identifier provided by the third application and assemble it into the first key information which is then sent to the service provider platform.

It should be noted that communication or connection can be established in advance between the second application and the third application provided in the receiving terminal, so that the second application and the third application may perform data exchange, and the second application can obtain the first key identifier provided by the third application.

After obtaining the first key information and the vehicle identification number, the service provider platform can generate the first service secret key, and can store the first key information, the vehicle identification number, and the corresponding relationship with the first service secret key.

Specifically, the first service secret key can be generated by an AES (Advanced Encryption Standard) 128 algorithm combined with an encryption machine and can be used to perform a response challenge with the NFC security module of the vehicle terminal to complete key authentication.

Step 303: generating first secret key information corresponding to the first key identifier and the first service secret key, wherein the first secret key information includes first permission information.

The token information of the first secret key information may include the first permission information, which may be default permission information or permission information selected by the user in the first application.

After the first service secret key is generated, the service provider platform may assemble the first key identifier, the first service secret key, and the first permission information into the first secret key information.

Step 304: sending the first secret key information to the vehicle terminal to be synchronized to the whitelist of the NFC security module in the vehicle terminal, and writing the first service secret key to the NFC encryption chip of the receiving terminal.

Specifically, writing the first service secret key into the NFC encryption chip of the receiving terminal may include the following step:
writing the first service secret key into the NFC encryption chip of the receiving terminal through the secure element issuer platform and the third application.

After obtaining the first secret key information, the first service secret key can be written onto the NFC encryption chip of the receiving terminal through the third application by invoking a permission writing interface in the TSM server of the secure element issuer platform.

Moreover, the service provider platform may send the first secret key information to the vehicle terminal, and the NFC security module in the vehicle terminal can store the first secret key information in the whitelist to complete the activation of the NFC virtual key to transition the NFC virtual key to an enabled state.

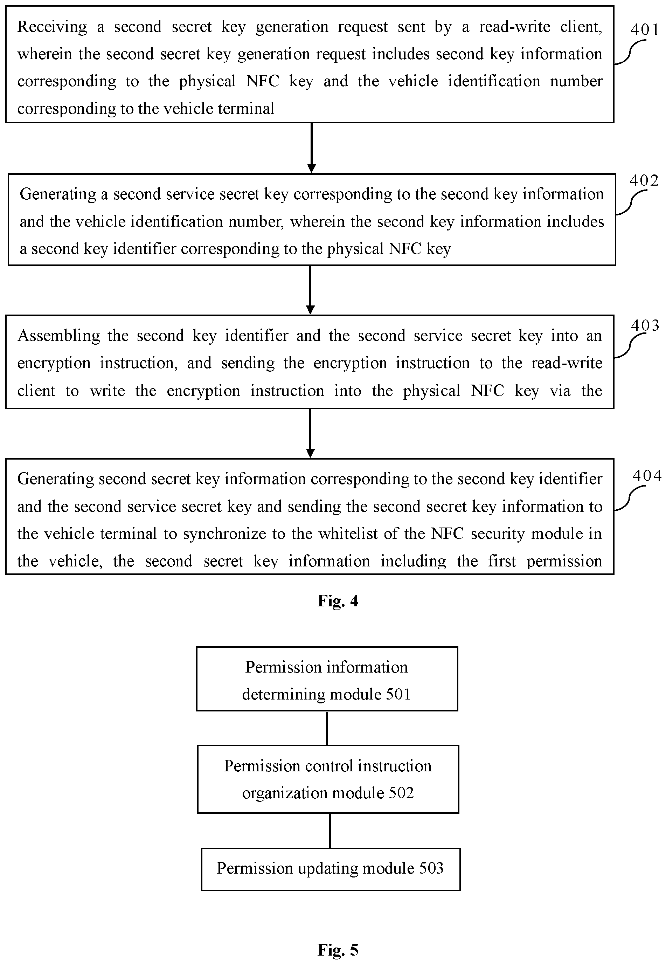

In an embodiment of the present invention, the vehicle key includes an NFC physical key, and the key identifier may correspond to the NFC physical key. As shown in Figure 4, before performing permission update, the following steps may also be performed:
Step 401: receiving a second secret key generation request sent by a read-write client, wherein the second secret key generation request includes second key information corresponding to the NFC physical key and the vehicle identification number corresponding to the vehicle terminal.

The NFC physical key can be a card key with an NFC chip, which may be manufactured by a third-party vendor. For an NFC physical key that is not written with a secret key, i.e., a "white card", the surface may be imprinted with a unique key number. The NFC chip inside has a unique chip identifier, and the storage area has a unique key identifier (NFC_Card_Identifier).

The read-write client may include a read-write device and a client application installed on a computer terminal and connected to the read-write device, and the client application is connected to the service provider platform through a network.

When a secret key needs to be written onto the NFC physical key, the NFC physical key can be put in contact with the read/write device, and the read/write device can scan second key information corresponding to the NFC physical key, such as the key number imprinted on the NFC physical key, the chip identifier of the NFC chip, as well as the stored unique key identifier.

After the scan, the key information can be displayed by the client application on the computer terminal. A user can input the vehicle identification number of the vehicle to be bound with the NFC physical key, and the client application can create a second secret key generation request associating the vehicle identification number and the second key information and send the second secret key generation request to the service provider platform. The service provider platform can receive the second secret key generation request.

Step 402: generating a second service secret key corresponding to the second key information and the vehicle identification number, wherein the second key information includes a second key identifier corresponding to the NFC physical key.

After receiving the second secret key generation request, the service provider platform can generate the second service secret key and can store the corresponding relationship between the second key information, the vehicle identification number, and the second service secret key.

Specifically, the second service secret key can be generated by an AES (Advanced Encryption Standard) 128 algorithm combined with an encryption machine and can be used to perform a response challenge with the NFC security module of the vehicle terminal to complete key authentication.

Step 403: assembling the second key identifier and the second service secret key into an encryption instruction, and sending the encryption instruction to the read-write client to write the encryption instruction into the NFC physical key via the read-write client.

After generating the second service secret key, the second key identifier and the second service secret key can be assembled into an encryption instruction based on an APDU (Application Protocol Data Unit) by the TSM server of the service provider platform. The encryption instructions is then sent to the read-write client.

After receiving the encryption instruction, the client application in the read-write client can write the encryption instruction into the NFC physical key through the read-write device. The NFC physical key has an Applet component, and the second service secret key can be burned onto the NFC physical key using the Applet component. The binding of the NFC physical key and the vehicle is then completed.

Step 404: generating second secret key information corresponding to the second key identifier and the second service secret key and sending the second secret key information to the vehicle terminal to be synchronized to the whitelist of the NFC security module in the vehicle.

The token information of the second secret key information may include first permission information, which may be default permission information, or permission information selected by the user in the first application.

After the binding is completed, the service provider platform can assemble the second key identifier, the second service secret key, and the first permission information into second secret key information and send the second secret key information to the vehicle terminal. The NFC security module can store the second secret key information in the whitelist to complete the activation of the NFC virtual key and to transition the NFC virtual key to an enabled state.

In the embodiment of the present invention, by determining a key identifier corresponding to a permission control request and second permission information corresponding to the key identifier upon receipt of a permission control request sent by a first application, first permission information corresponding to the key identifier stored in an NFC security module of the vehicle terminal, generating a permission control instruction based on the key identifier and the second permission information, and sending the permission control instruction to the vehicle terminal to use the second permission information to update the first permission information in the NFC security module of the vehicle terminal, the invention implements permission control for vehicle keys, ensures compatibility of physical keys and virtual keys, and improves security of vehicle keys.

For the sake of simple description, embodiments of the method are expressed as a series of combinations of actions. Those skilled in the art should know that the embodiments of the present invention are not limited by the described sequence of actions. According to the embodiments of the present invention, certain steps may be performed in different orders from the described orders or simultaneously. Additionally, those skilled in the art should also know that the embodiments described in the specification are all preferred embodiments, and the actions involved are not necessarily required to work the present invention.

Reference is made to FIG. 5, which is a schematic structural diagram of a vehicle key control apparatus in accordance with an embodiment of the present invention. The apparatus interacts with a user terminal, a vehicle terminal, and a service provider platform. The user terminal is deployed with a first application corresponding to the service provider platform and may specifically include the following modules:
a permission information determining module 501 configured to, upon receipt of a permission control request sent by the first application, determine a key identifier corresponding to the permission control request and second permission information corresponding to the key identifier, wherein first permission information corresponding to the key identifier is stored in an NFC security module of the vehicle terminal;
a permission control instruction organization module 502, configured to generate a permission control instruction based on the key identifier and the second permission information; and
a permission update module 503, configured to send the permission control instruction to the vehicle terminal to use the second permission information to update the first permission information in the NFC security module of the vehicle terminal.

In an embodiment of the present invention, the permission information determining module 501 includes:
a key number determining sub-module, configured to determine a key number from the permission control request; and
a key identifier finding sub-module, configured to search for a key identifier corresponding to the key number in a pre-stored list of key information.

In an embodiment of the present invention, the vehicle key includes an NFC virtual key, and the key identifier corresponds to an NFC virtual key, and the apparatus further comprises:
a virtual key sharing request receiving module, configured to receive a virtual key sharing request sent by the first application for a receiving terminal;
a first service secret key generation module, configured to determine first key information corresponding to the virtual key sharing request and a vehicle identification number corresponding to the vehicle terminal, and to generate a first service secret key corresponding to the first key information and the vehicle identification number, wherein the first secret key information includes a first key identifier;
a first secret key information generating module, configured to generate first secret key information corresponding to the first key identifier and the first service secret key, wherein the first secret key information includes the first permission information; and
a first key activation module, configured to send the first secret key information to the vehicle terminal to be synchronized to a whitelist of the NFC security module in the vehicle terminal, and to write the first service secret key into the NFC encryption chip of the receiving terminal.

In an embodiment of the present invention, the apparatus further interacts with a secure element issuer platform, and the receiving terminal is deployed with a second application corresponding to the service provider platform and a third application corresponding to the secure element issuer platform;
the virtual key sharing request is a request generated by the first application based on a selected NFC virtual key and/or an entered vehicle identification number, and entered receiving terminal information; and
the first key activation module includes:
   a first service secret key writing sub-module, configured to write the first service secret key into the NFC encryption chip of the receiving terminal through the secure element issuer platform and the third application.

In an embodiment of the present invention, the first service secret key generation module comprises:
a first key identifier writing sub-module, configured to generate the first key identifier corresponding to the receiving terminal, and to write the first key identifier into the NFC encryption chip of the receiving terminal via the secure element issuer platform and the third application; and
a first key identifier acquiring sub-module, configured to acquire the first key identifier corresponding to the receiving terminal via the second application in response to the virtual key sharing request.

In an embodiment of the present invention, the vehicle key includes an NFC physical key, and the key identifier corresponds to an NFC physical key, the apparatus further comprises:
a second secret key generation request receiving module, configured to receive a second secret key generation request sent by a read-write client, wherein the second secret key generation request includes second key information corresponding to the NFC physical key and the vehicle identification number corresponding to the vehicle terminal;
a second service secret key generation module, configured to generate a second service secret key corresponding to the second key information and the vehicle identification number, wherein the second key information includes a second key identifier corresponding to the NFC physical key;
an encryption instruction sending module, configured to assemble the second key identifier and the second service secret key into an encryption instruction, and send the encryption instruction to the read-write client to write the encryption instruction into the NFC physical key via the read-write client; and
a second key activation module, configured to generate second secret key information corresponding to the second key identifier and the second service secret key and send the second secret key information to the vehicle terminal to be synchronized to the whitelist of the NFC security module in the vehicle, wherein the second secret key information includes the first permission information.

In an embodiment of the present invention, the second permission information includes one or more of the following:
unlock vehicle permission, lock vehicle permission, start vehicle permission, DC charging permission, AC charging permission, autonomous driving on permission, autonomous driving off permission, assisted driving on permission, and assisted driving off permission.

Operation of the apparatus of the present invention is consistent with the methods described above.

In an embodiment of the present invention, there is also provided a vehicle, which may include a processor, a memory device, and executable computer program stored on the memory device, wherein the computer program, when executed by the processor, results in performance of the control method for vehicle keys described above.

In an embodiment of the present invention, there is also provided a computer-readable storage medium. The computer-readable storage medium stores a computer program which, when executed by the processor, results in performance of the control method for vehicle keys described above.

The various embodiments in this specification are described in a progressive manner. Description of each embodiment focuses on the differences between that embodiment and other embodiments. The same or similar parts between the various embodiments can be interchanged.

Those skilled in the art should understand that the embodiments of the present invention may be provided as methods, apparatus, or computer program products. Therefore, the embodiments of the present invention may be implemented in the form of a complete hardware embodiment, a complete software embodiment, or an embodiment combining software and hardware. Moreover, the embodiments of the present invention may take the form of computer program products implemented on one or more computer-usable storage media (including but not limited to disk storage, CD-ROM, optical storage, etc.) containing computer-executable program codes.

The embodiments of the present invention are described with reference to flowcharts and/or block diagrams of methods, terminal devices (systems), and computer program products. It will be appreciated that each process and/or block of the flowcharts and/or block diagrams, and any combinations thereof can be implemented by computer program instructions. These computer program instructions may be provided to the processors of general-purpose computers, special-purpose computers, embedded processors or other programmable data processing terminal equipment, so that the instructions executed by the processor of the computer or other programmable data processing terminal device constitute means for implementing the functions specified in a flow or multiple flows of the flowcharts and/or a block or multiple blocks of the block diagrams.

These computer program instructions may also be stored in a computer-readable storage medium that can guide a computer or other programmable data processing terminal device to work in a specific manner, so that the instructions stored in the computer-readable memory produce an article of manufacture with the instruction device. The instruction device implements the functions specified in a flow or multiple flows of the flowcharts and/or a block or multiple blocks of the block diagrams.

These computer program instructions may also be loaded on a computer or other programmable data processing terminal device, to cause a series of operation steps to be executed on the computer or other programmable terminal device to produce a computer-implemented processing, so that the computer or other programmable terminal device provide steps for implementing functions specified in a flow or multiple flows of the flowcharts and/or a block or multiple blocks of the block diagrams.

While preferred embodiments of the present invention have been described, other alterations and modifications to those embodiments may be made by those skilled in the art once the basic inventive concept is recognized. It is therefore intended that the appended claims be interpreted as covering the preferred embodiments and all alterations and modifications that fall within the scope of embodiments of the present invention.

Finally, it should be noted that in this application, relational terms such as the first and the second and the like herein are only used to distinguish one entity or operation from another entity or operation, and do not necessarily require or imply any actual such relations or ordering between such entities or operations. Moreover, the terms "include", "comprise" or any other variants thereof are intended to cover non-exclusive inclusion, so that a process, method, article, or terminal device that includes a series of elements includes not only those elements, but also those that are not explicitly listed but nevertheless inherent to this process, method, article, or terminal device. Without further limitations, an element defined by the sentence "including a..." does not exclude the existence of other identical or equivalent elements in the process, method, article, or terminal device that includes the element.

The above provides a detailed introduction to the control method and apparatus for a vehicle key. Specific examples are used in this article to explain the principles and implementation of the invention. The description of the examples is only for the purpose of facilitating understanding of the invention. Those of ordinary skill in the art may derive modifications of the specific examples based on the inventive concept of this invention.

## Claims

1. A control method for a vehicle key, wherein the method relates to a user terminal (201), a vehicle terminal (203), and a service provider platform (202), the user terminal is deployed with a first application corresponding to the service provider platform, and the method comprises:
upon receipt of a permission control request sent by the first application, determining (101) a key identifier corresponding to the permission control request and second permission information corresponding to the key identifier, wherein first permission information corresponding to the key identifier is stored in a whitelist of an NFC security module of the vehicle terminal;
generating (102) a permission control instruction based on the key identifier and the second permission information; and
sending (103) the permission control instruction to the vehicle terminal to use the second permission information to update the first permission information in the NFC security module of the vehicle terminal, wherein using the second permission information to update the first permission information comprises finding the first permission information in token information corresponding to the key identifier in the whitelist of the NFC security module and replacing the first permission information in the token information with the second permission information.

2. The method according to claim 1, wherein said determining a key identifier corresponding to the permission control request comprises:
determining a key number from the permission control request; and
searching for a key identifier corresponding to the key number in a pre-stored list of key information.

3. The method according to claim 1 or 2, wherein the vehicle key includes an NFC virtual key, and the key identifier corresponds to an NFC virtual key, the method further comprising:
receiving (301) a virtual key sharing request sent by the first application for a receiving terminal;
determining (302) first key information corresponding to the virtual key sharing request and a vehicle identification number corresponding to the vehicle terminal, and generating a first service secret key corresponding to the first key information and the vehicle identification number, wherein the first secret key information includes a first key identifier;
generating (303) first secret key information corresponding to the first key identifier and the first service secret key, wherein the first secret key information includes the first permission information; and
sending (304) the first secret key information to the vehicle terminal to be synchronized to the whitelist of the NFC security module in the vehicle terminal, and writing the first service secret key into the NFC encryption chip of the receiving terminal.

4. The method according to claim 3, wherein the method further relates to a secure element issuer platform, and the receiving terminal is deployed with a second application corresponding to the service provider platform and a third application corresponding to the secure element issuer platform;
the virtual key sharing request is a request generated by the first application based on a selected NFC virtual key and/or an entered vehicle identification number, and entered receiving terminal information; and
the step of writing the first service secret key into the NFC encryption chip of the receiving terminal includes:
writing the first service secret key into the NFC encryption chip of the receiving terminal via the secure element issuer platform and the third application.

5. The method according to claim 4, wherein the step of determining the first key information corresponding to the virtual key sharing request comprises:
generating the first key identifier corresponding to the receiving terminal, and writing the first key identifier into the NFC encryption chip of the receiving terminal via the secure element issuer platform and the third application; and
in response to the virtual key sharing request, acquiring the first key identifier corresponding to the receiving terminal via the second application.

6. The method according to claim 1 or 2, wherein the vehicle key includes an NFC physical key, and the key identifier corresponds to an NFC physical key, and the method further comprises:
receiving (401) a second secret key generation request sent by a read-write client, wherein the second secret key generation request includes second key information corresponding to the NFC physical key and the vehicle identification number corresponding to the vehicle terminal;
generating (402) a second service secret key corresponding to the second key information and the vehicle identification number, wherein the second key information includes a second key identifier corresponding to the NFC physical key;
assembling (403) the second key identifier and the second service secret key into an encryption instruction, and sending the encryption instruction to the read-write client to write the encryption instruction into the NFC physical key via the read-write client; and
generating (404) second secret key information corresponding to the second key identifier and the second service secret key and sending the second secret key information to the vehicle terminal to be synchronized to the whitelist of the NFC security module in the vehicle, wherein the second secret key information includes the first permission information.

7. The method according to claim 1, wherein the second permission information includes one or more of the following:
unlock vehicle permission, lock vehicle permission, start vehicle permission, DC charging permission, AC charging permission, autonomous driving on permission, autonomous driving off permission, assisted driving on permission, and assisted driving off permission.

8. A control apparatus for a vehicle key, wherein the apparatus interacts with a user terminal (201), a vehicle terminal (203), and a service provider platform (202), the user terminal is deployed with a first application corresponding to the service provider platform, and the apparatus includes:
a permission information determining module (501) configured to, upon receipt of a permission control request sent by the first application, determine a key identifier corresponding to the permission control request and second permission information corresponding to the key identifier, wherein first permission information corresponding to the key identifier is stored in a whitelist of an NFC security module of the vehicle terminal;
a permission control instruction organization module (502), configured to generate a permission control instruction based on the key identifier and the second permission information; and
a permission update module (503), configured to send the permission control instruction to the vehicle terminal to use the second permission information to update the first permission information in the NFC security module of the vehicle terminal, wherein using the second permission information to update the first permission information comprises finding the first permission information in token information corresponding to the key identifier in the whitelist of the NFC security module and replacing the first permission information in the token information with the second permission information.

9. The apparatus according to claim 8, wherein the permission information determining module comprises:
a key number determining sub-module, configured to determine a key number from the permission control request; and
a key identifier finding sub-module, configured to search for a key identifier corresponding to the key number in a pre-stored list of key information.

10. The apparatus according to claim 8 or 9, wherein the vehicle key includes an NFC virtual key, and the key identifier corresponds to an NFC virtual key, and the apparatus further comprises:
a virtual key sharing request receiving module, configured to receive a virtual key sharing request sent by the first application for a receiving terminal;
a first service secret key generation module, configured to determine first key information corresponding to the virtual key sharing request and a vehicle identification number corresponding to the vehicle terminal, and to generate a first service secret key corresponding to the first key information and the vehicle identification number, wherein the first secret key information includes a first key identifier;
a first secret key information generating module, configured to generate first secret key information corresponding to the first key identifier and the first service secret key, wherein the first secret key information includes the first permission information; and
a first key activation module, configured to send the first secret key information to the vehicle terminal to be synchronized to the whitelist of the NFC security module in the vehicle terminal, and to write the first service secret key into the NFC encryption chip of the receiving terminal.

11. The apparatus according to claim 10, wherein the apparatus further interacts with a secure element issuer platform, and the receiving terminal is deployed with a second application corresponding to the service provider platform and a third application corresponding to the secure element issuer platform;
the virtual key sharing request is a request generated by the first application based on a selected NFC virtual key and/or an entered vehicle identification number, and entered receiving terminal information; and
the first key activation module includes:
a first service secret key writing sub-module, configured to write the first service secret key into the NFC encryption chip of the receiving terminal through the secure element issuer platform and the third application.

12. The apparatus according to claim 11, wherein the first service secret key generation module comprises:
a first key identifier writing sub-module, configured to generate the first key identifier corresponding to the receiving terminal, and to write the first key identifier into the NFC encryption chip of the receiving terminal via the secure element issuer platform and the third application; and
a first key identifier acquiring sub-module, configured to acquire the first key identifier corresponding to the receiving terminal via the second application in response to the virtual key sharing request.

13. The apparatus according to claim 8 or 9, wherein the vehicle key includes an NFC physical key, and the key identifier corresponds to an NFC physical key, the apparatus further comprises:
a second secret key generation request receiving module, configured to receive a second secret key generation request sent by a read-write client, wherein the second secret key generation request includes second key information corresponding to the NFC physical key and the vehicle identification number corresponding to the vehicle terminal;
a second service secret key generation module, configured to generate a second service secret key corresponding to the second key information and the vehicle identification number, wherein the second key information includes a second key identifier corresponding to the NFC physical key;
an encryption instruction sending module, configured to assemble the second key identifier and the second service secret key into an encryption instruction, and send the encryption instruction to the read-write client to write the encryption instruction into the NFC physical key via the read-write client; and
a second key activation module, configured to generate second secret key information corresponding to the second key identifier and the second service secret key and send the second secret key information to the vehicle terminal to be synchronized to the whitelist of the NFC security module in the vehicle, wherein the second secret key information includes the first permission information.

14. A vehicle, comprising a processor, a memory device, and executable computer program stored on the memory device, wherein the computer program, when executed by the processor, results in performance of the control method for a vehicle key according to any one of claims 1 to 7.

15. A computer-readable storage medium, storing a computer program thereon which, when executed by the processor, results in performance of the control method for a vehicle key according to any one of claims 1 to 7.

## Patentansprüche

1. Verfahren zum Steuern eines Fahrzeugschlüssels, wobei sich das Verfahren auf ein Benutzerterminal (201), ein Fahrzeugterminal (203) und eine Dienstanbieterplattform (202) bezieht, wobei das Benutzerterminal mit einer ersten Anwendung entsprechend der Dienstanbieterplattform eingesetzt wird, und das Verfahren Folgendes beinhaltet:
Bestimmen (101), nach dem Empfang einer von der ersten Anwendung gesendeten Berechtigungssteuerungsanforderung, einer Schlüsselkennung entsprechend der Berechtigungssteuerungsanforderung und zweiter Berechtigungsinformationen entsprechend der Schlüsselkennung, wobei der Schlüsselkennung entsprechende erste Berechtigungsinformationen in einer Whitelist eines NFC-Sicherheitsmoduls des Fahrzeugterminals gespeichert sind;
Erzeugen (102) eines Berechtigungssteuerungsbefehls auf der Basis der Schlüsselkennung und der zweiten Berechtigungsinformationen; und
Senden (103) des Berechtigungssteuerungsbefehls zum Fahrzeugterminal, um die zweiten Berechtigungsinformationen zum Aktualisieren der ersten Berechtigungsinformationen im NFC-Sicherheitsmodul des Fahrzeugterminals zu verwenden, wobei die Verwendung der zweiten Berechtigungsinformationen zum Aktualisieren der ersten Berechtigungsinformationen das Auffinden der ersten Berechtigungsinformationen in Token-Informationen entsprechend der Schlüsselkennung in der Whitelist des NFC-Sicherheitsmoduls und das Ersetzen der ersten Berechtigungsinformationen in den Token-Informationen durch die zweiten Berechtigungsinformationen beinhaltet.

2. Verfahren nach Anspruch 1, wobei das genannte Bestimmen einer Schlüsselkennung entsprechend der Berechtigungssteuerungsanforderung Folgendes beinhaltet:
Bestimmen einer Schlüsselnummer aus der Berechtigungssteuerungsanforderung, und
Suchen einer Schlüsselkennung entsprechend der Schlüsselnummer in einer vorab gespeicherten Liste von Schlüsselinformationen.

3. Verfahren nach Anspruch 1 oder 2, wobei der Fahrzeugschlüssel einen virtuellen NFC-Schlüssel enthält und die Schlüsselkennung einem virtuellen NFC-Schlüssel entspricht, wobei das Verfahren ferner Folgendes beinhaltet:
Empfangen (301) einer von der ersten Anwendung für ein Empfangsterminal gesendeten Virtual-Key-Sharing-Anforderung;
Bestimmen (302) erster Schlüsselinformationen entsprechend der Virtual-Key-Sharing-Anforderung und einer Fahrzeugkennnummer entsprechend dem Fahrzeugterminal und Erzeugen eines ersten Dienstgeheimschlüssels entsprechend den ersten Schlüsselinformationen und der Fahrzeugkennnummer, wobei die Erster-Geheimschlüssel-Informationen eine erste Schlüsselkennung enthalten;
Erzeugen (303) Erster-Geheimschlüssel-Informationen entsprechend der ersten Schlüsselkennung und dem ersten Dienstgeheimschlüssel, wobei die Erster-Geheimschlüssel-Informationen die erste Berechtigungsinformationen enthalten; und
Senden (304) der Erster-Geheimschlüssel-Informationen zum Fahrzeugterminal zum Synchronisieren mit der Whitelist des NFC-Sicherheitsmoduls im Fahrzeugterminal und Schreiben des ersten Dienstgeheimschlüssels in den NFC-Verschlüsselungschip des Empfangsterminals.

4. Verfahren nach Anspruch 3, wobei sich das Verfahren ferner auf eine Emittentenplattform für sichere Elemente bezieht und das Empfangsterminal mit einer zweiten Anwendung entsprechend der Dienstanbieterplattform und einer dritten Anwendung entsprechend der Emittentenplattform für sichere Elemente eingesetzt wird;
die Virtual-Key-Sharing-Anforderung eine Anforderung ist, die von der ersten Anwendung auf der Basis eines ausgewählten virtuellen NFC-Schlüssels und/oder einer eingegebenen Fahrzeugkennnummer und eingegebener Empfangsterminalinformationen erzeugt wird; und
der Schritt des Schreibens des ersten Dienstgeheimschlüssels in den NFC-Verschlüsselungschip des Empfangsterminals Folgendes beinhaltet:
Schreiben des ersten Dienstgeheimschlüssels in den NFC-Verschlüsselungschip des Empfangsterminals über die Emittentenplattform für sichere Elemente und die dritte Anwendung.

5. Verfahren nach Anspruch 4, wobei der Schritt des Bestimmens der Erster-Schlüssel-Informationen entsprechend der Virtual-Key-Sharing-Anforderung Folgendes beinhaltet:
Erzeugen der ersten Schlüsselkennung entsprechend dem Empfangsterminal und Schreiben der ersten Schlüsselkennung in den NFC-Verschlüsselungschip des Empfangsterminals über die Emittentenplattform für sichere Elemente und die dritte Anwendung; und
Erfassen, als Reaktion auf die Virtual-Key-Sharing-Anforderung, der ersten Schlüsselkennung entsprechend dem Empfangsterminal über die zweite Anwendung.

6. Verfahren nach Anspruch 1 oder 2, wobei der Fahrzeugschlüssel einen physischen NFC-Schlüssel enthält und die Schlüsselkennung einem physischen NFC-Schlüssel entspricht, und das Verfahren ferner Folgendes beinhaltet:
Empfangen (401) einer von einem Schreib-Lese-Client gesendeten Zweiter-Geheimschlüssel-Erzeugungsanforderung, wobei die Zweiter-Geheimschlüssel-Erzeugungsanforderung zweite Schlüsselinformationen entsprechend dem physischen NFC-Schlüssel und der Fahrzeugkennnummer entsprechend dem Fahrzeugterminal enthält;
Erzeugen (402) eines zweiten Dienstgeheimschlüssels entsprechend den Zweiter-Schlüssel-Informationen und der Fahrzeugkennnummer, wobei die Zweiter-Schlüssel-Informationen eine zweite Schlüsselkennung entsprechend dem physischen NFC-Schlüssel enthalten;
Zusammensetzen (403) der zweiten Schlüsselkennung und des zweiten Dienstgeheimschlüssels zu einem Verschlüsselungsbefehl und Senden des Verschlüsselungsbefehls zum Schreib-Lese-Client zum Schreiben des Verschlüsselungsbefehls über den Schreib-Lese-Client in den physischen NFC-Schlüssel; und
Erzeugen (404) von Zweiter-Geheimschlüssel-Informationen entsprechend der zweiten Schlüsselkennung und dem zweiten Dienstgeheimschlüssel und Senden der Zweiter-Geheimschlüssel-Informationen zum Fahrzeugterminal zum Synchronisieren mit der Whitelist des NFC-Sicherheitsmoduls in dem Fahrzeug, wobei die Zweiter-Geheimschlüssel-Informationen die ersten Berechtigungsinformationen enthalten.

7. Verfahren nach Anspruch 1, wobei die zweiten Berechtigungsinformationen eines oder mehrere enthalten von:
Fahrzeugentriegelungsberechtigung, Fahrzeugverriegelungsberechtigung, Fahrzeugstartberechtigung, Gleichstromladeberechtigung, Wechselstromladeberechtigung, Berechtigung zum Einschalten von autonomem Fahren, Berechtigung zum Ausschalten von autonomem Fahren, Berechtigung zum Einschalten von unterstütztem Fahren und Berechtigung zum Ausschalten von unterstütztem Fahren.

8. Vorrichtung zum Steuern eines Fahrzeugschlüssels, wobei die Vorrichtung mit einem Benutzerterminal (201), einem Fahrzeugterminal (203) und einer Dienstanbieterplattform (202) interagiert, wobei das Benutzerterminal mit einer ersten Anwendung entsprechend der Dienstanbieterplattform eingesetzt wird, und wobei die Vorrichtung Folgendes umfasst:
ein Berechtigungsinformationsbestimmungsmodul (501), konfiguriert zum Bestimmen, nach dem Empfang einer von der ersten Anwendung gesendeten Berechtigungssteuerungsanforderung, einer Schlüsselkennung entsprechend der Berechtigungssteuerungsanforderung und zweiter Berechtigungsinformationen entsprechend der Schlüsselkennung, wobei erste Berechtigungsinformationen entsprechend der Schlüsselkennung in einer Whitelist eines NFC-Sicherheitsmoduls des Fahrzeugterminals gespeichert sind;
ein Berechtigungssteuerungsbefehl-Organisationsmodul (502), das zum Erzeugen eines Berechtigungssteuerungsbefehls auf der Basis der Schlüsselkennung und der zweiten Berechtigungsinformationen konfiguriert ist;
und ein Berechtigungsaktualisierungsmodul (503), das zum Senden des Berechtigungssteuerungsbefehls zum Fahrzeugterminal konfiguriert ist, um die zweiten Berechtigungsinformationen zum Aktualisieren der ersten Berechtigungsinformationen im NFC-Sicherheitsmodul des Fahrzeugterminals zu verwenden, wobei das Verwenden der zweiten Berechtigungsinformationen zum Aktualisieren der ersten Berechtigungsinformationen das Auffinden der ersten Berechtigungsinformationen in Token-Informationen entsprechend der Schlüsselkennung in der Whitelist des NFC-Sicherheitsmoduls und das Ersetzen der ersten Berechtigungsinformationen in den Token-Informationen durch die zweiten Berechtigungsinformationen beinhaltet.

9. Vorrichtung nach Anspruch 8, wobei das Berechtigungsinformationsbestimmungsmodul Folgendes umfasst:
ein Schlüsselnummerbestimmungs-Submodul, das zum Bestimmen einer Schlüsselnummer aus der Berechtigungsteuerungsanforderung konfiguriert ist; und
ein Schlüsselkennungsauffindungs-Submodul, das zum Suchen einer Schlüsselkennung entsprechend der Schlüsselnummer in einer vorab gespeicherten Liste von Schlüsselinformationen konfiguriert ist.

10. Vorrichtung nach Anspruch 8 oder 9, wobei der Fahrzeugschlüssel einen virtuellen NFC-Schlüssel enthält und die Schlüsselkennung einem virtuellen NFC-Schlüssel entspricht, und die Vorrichtung ferner Folgendes umfasst:
ein Virtual-Key-Sharing-Anforderungsempfangsmodul, das zum Empfangen einer von der ersten Anwendung gesendeten Virtual-Key-Sharing-Anforderung für ein Empfangsterminal konfiguriert ist;
ein Erster-Dienstgeheimschlüssel-Erzeugungsmodul, das zum Bestimmen erster Schlüsselinformationen entsprechend der Virtual-Key-Sharing-Anforderung und einer Fahrzeugkennnummer entsprechend dem Fahrzeugterminal und zum Erzeugen eines ersten Dienstgeheimschlüssels entsprechend den ersten Schlüsselinformationen und der Fahrzeugkennnummer konfiguriert ist, wobei die Erster-Geheimschlüssel-Informationen eine erste Schlüsselkennung enthalten;
ein Erster-Geheimschlüssel-Informationserzeugungsmodul, das zum Erzeugen von Erster-Geheimschlüssel-Informationen entsprechend der ersten Schlüsselkennung und dem ersten Dienstgeheimschlüssel konfiguriert ist, wobei die Erster-Geheimschlüssel-Informationen die ersten Berechtigungsinformationen enthalten; und
ein erstes Schlüsselaktivierungsmodul, das zum Senden der Erster-Geheimschlüssel-Informationen zum Fahrzeugterminal zum Synchronisieren mit der Whitelist des NFC-Sicherheitsmoduls im Fahrzeugterminal und zum Schreiben des ersten Dienstgeheimschlüssels in den NFC-Verschlüsselungschip des Empfangsterminals konfiguriert ist.

11. Vorrichtung nach Anspruch 10, wobei die Vorrichtung ferner mit einer Emittentenplattform für sichere Elemente interagiert und das Empfangsterminal mit einer zweiten Anwendung entsprechend der Dienstanbieterplattform und einer dritten Anwendung entsprechend der Emittentenplattform für sichere Elemente eingesetzt wird;
die Virtual-Key-Sharing-Anforderung eine Anforderung ist, die von der ersten Anwendung auf der Basis eines ausgewählten virtuellen NFC-Schlüssels und/oder einer eingegebenen Fahrzeugkennnummer und eingegebener Empfangsterminalinformationen erzeugt wird; und
das Erster-Schlüssel-Aktivierungsmodul Folgendes beinhaltet:
ein Submodul zum Schreiben des ersten Dienstgeheimschlüssels, das zum Schreiben des ersten Dienstgeheimschlüssels in den NFC-Verschlüsselungschip des Empfangsterminals über die Emittentenplattform für sichere Elemente und die dritte Anwendung konfiguriert ist.

12. Vorrichtung nach Anspruch 11, wobei das Erster-Dienstgeheimschlüssel-Erzeugungsmodul Folgendes umfasst:
ein Submodul zum Schreiben einer ersten Schlüsselkennung, das zum Erzeugen der ersten Schlüsselkennung entsprechend dem Empfangsterminal und zum Schreiben der ersten Schlüsselkennung in den NFC-Verschlüsselungschip des Empfangsterminals über die Emittentenplattform für sichere Elemente und die dritte Anwendung konfiguriert ist; und
ein Submodul zum Erfassen der ersten Schlüsselkennung, das zum Erfassen der ersten Schlüsselkennung entsprechend dem Empfangsterminal über die zweite Anwendung als Reaktion auf die Virtual-Key-Sharing-Anforderung konfiguriert ist.

13. Vorrichtung nach Anspruch 8 oder 9, wobei der Fahrzeugschlüssel einen physischen NFC-Schlüssel enthält und die Schlüsselkennung einem physischen NFC-Schlüssel entspricht, wobei die Vorrichtung ferner Folgendes umfasst:
ein Modul zum Empfangen einer Zweiter-Geheimschlüssel-Erzeugungsanforderung, das zum Empfangen einer von einem Schreib-Lese-Client gesendeten Zweiter-Geheimschlüssel-Erzeugungsanforderung konfiguriert ist, wobei die Zweiter-Geheimschlüssel-Erzeugungsanforderung zweite Schlüsselinformationen entsprechend dem physischen NFC-Schlüssel und der Fahrzeugkennnummer entsprechend dem Fahrzeugterminal enthält;
ein Zweiter-Dienstgeheimschlüssel-Erzeugungsmodul, das zum Erzeugen eines zweiten Dienstgeheimschlüssels entsprechend den zweiten Schlüsselinformationen und der Fahrzeugkennnummer konfiguriert ist, wobei die zweiten Schlüsselinformationen eine zweite Schlüsselkennung entsprechend dem physischen NFC-Schlüssel enthalten;
ein Verschlüsselungsbefehlsendemodul, das zum Zusammensetzen der zweiten Schlüsselkennung und des zweiten Dienstgeheimschlüssels zu einem Verschlüsselungsbefehl und zum Senden des Verschlüsselungsbefehls zum Schreib-Lese-Client zum Schreiben des Verschlüsselungsbefehls über den Schreib-Lese-Client in den physischen NFC-Schlüssel konfiguriert ist; und
ein Zweiter-Schlüssel-Aktivierungsmodul, das zum Erzeugen von Zweiter-Geheimschlüssel-Informationen entsprechend der zweiten Schlüsselkennung und des zweiten Dienstgeheimschlüssels und zum Senden der Zweiter-Geheimschlüssel-Informationen zum Fahrzeugterminal zum Synchronisieren mit der Whitelist des NFC-Sicherheitsmoduls in dem Fahrzeug konfiguriert ist, wobei die Zweiter-Geheimschlüssel-Informationen die ersten Berechtigungsinformationen enthalten.

14. Fahrzeug, das einen Prozessor, ein Speichergerät und ein auf dem Speichergerät gespeichertes ausführbares Computerprogramm umfasst, wobei das Computerprogramm bei Ausführung durch den Prozessor zur Durchführung des Steuerverfahrens für einen Fahrzeugschlüssel nach einem der Ansprüche 1 bis 7 führt.

15. Computerlesbares Speichermedium, auf dem ein Computerprogramm gespeichert ist, das bei Ausführung durch den Prozessor zur Durchführung des Steuerverfahrens für einen Fahrzeugschlüssel nach einem der Ansprüche 1 bis 7 führt.

## Revendications

1. Procédé de commande pour une clé de véhicule, dans lequel le procédé concerne un terminal d'utilisateur (201), un terminal de véhicule (203), et une plateforme de fournisseur de service (202), le terminal d'utilisateur est déployé avec une première application correspondant à la plateforme de fournisseur de service, et le procédé comprend :
à réception d'une demande de commande d'autorisation envoyée par la première application, une détermination (101) d'un identifiant de clé correspondant à la demande de commande d'autorisation et de secondes informations d'autorisation correspondant à l'identifiant de clé, dans lequel de premières informations d'autorisation correspondant à l'identifiant de clé sont stockées dans une liste blanche d'un module de sécurité NFC du terminal de véhicule ;
une génération (102) d'une instruction de commande d'autorisation sur la base de l'identifiant de clé et des secondes informations d'autorisation ; et
un envoi (103) de l'instruction de commande d'autorisation au terminal de véhicule d'utiliser les secondes informations d'autorisation pour mettre à jour les premières informations d'autorisation dans le module de sécurité NFC du terminal de véhicule, dans lequel l'utilisation des secondes informations d'autorisation pour mettre à jour les premières informations d'autorisation comprend un repérage des premières informations d'autorisation dans des informations de jeton correspondant à l'identifiant de clé dans la liste blanche du module de sécurité NFC et un remplacement des premières informations d'autorisation dans les informations de jeton avec les secondes informations d'autorisation.

2. Procédé selon la revendication 1, dans lequel ladite détermination d'un identifiant de clé correspondant à la demande de commande d'autorisation comprend :
une détermination d'un numéro de clé à partir de la demande de commande d'autorisation ; et
une recherche d'un identifiant de clé correspondant au numéro de clé dans une liste pré-enregistrée d'informations de clé.

3. Procédé selon la revendication 1 ou 2, dans lequel la clé de véhicule inclut une clé virtuelle NFC, et l'identifiant de clé correspond à une clé virtuelle NFC, le procédé comprenant en outre :
une réception (301) d'une demande de partage de clé virtuelle envoyée par la première application pour un terminal de réception ;
une détermination (302) de premières informations de clé correspondant à la demande de partage de clé virtuelle et un numéro d'identification de véhicule correspondant au terminal de véhicule, et une génération d'une première clé secrète de service correspondant aux premières informations de clé et au numéro d'identification de véhicule, dans lequel les premières informations de clé secrète incluent un premier identifiant de clé ;
une génération (303) de premières informations de clé secrète correspondant au premier identifiant de clé et à la première clé secrète de service, dans lequel les premières informations de clé secrète incluent les premières informations d'autorisation ; et
un envoi (304) des premières informations de clé secrète au terminal de véhicule à synchroniser à la liste blanche du module de sécurité NFC dans le terminal de véhicule, et une écriture de la première clé secrète de service dans la puce de cryptage NFC du terminal récepteur.

4. Procédé selon la revendication 3, dans lequel le procédé concerne en outre une plateforme d'émetteur d'élément sécurisé, et le terminal récepteur est déployé avec une deuxième application correspondant à la plateforme de fournisseur de service et une troisième application correspondant à la plateforme d'émetteur d'élément sécurisé ;
la demande de partage de clé virtuelle est une demande générée par la première application sur la base d'une clé virtuelle NFC sélectionnée et/ou d'un numéro d'identification de véhicule saisi, et d'informations de terminal récepteur saisies ; et
l'étape d'écriture de la première clé secrète de service dans la puce de cryptage NFC du terminal récepteur inclut :
une écriture de la première clé secrète de service dans la puce de cryptage NFC du terminal récepteur par l'intermédiaire de la plateforme d'émetteur d'élément sécurisé et la troisième application.

5. Procédé selon la revendication 4, dans lequel l'étape de détermination des premières informations de clé correspondant à la demande de partage de clé virtuelle comprend :
une génération du premier identifiant de clé correspondant au terminal récepteur, et une écriture du premier identifiant de clé dans la puce de cryptage NFC du terminal récepteur par l'intermédiaire de la plateforme d'émetteur d'élément sécurisé et la troisième application ; et
en réponse à la demande de partage de clé virtuelle, une acquisition du premier identifiant de clé correspondant au terminal récepteur par l'intermédiaire de la deuxième application.

6. Procédé selon la revendication 1 ou 2, dans lequel la clé de véhicule inclut une clé physique NFC, et l'identifiant de clé correspond à une clé physique NFC, et le procédé comprend en outre :
une réception (401) d'une demande de génération de seconde clé secrète envoyée par un client de lecture-écriture, dans lequel la demande de génération de seconde clé secrète inclut de secondes informations de clé correspondant à la clé physique NFC et le numéro d'identification de véhicule correspondant au terminal de véhicule ;
une génération (402) d'une seconde clé secrète de service correspondant aux secondes informations de clé et au numéro d'identification de véhicule, dans lequel les secondes informations de clé incluent un second identifiant de clé correspondant à la clé physique NFC ;
un assemblage (403) du second identifiant de clé et de la seconde clé secrète de service dans une instruction de cryptage, et un envoi de l'instruction de cryptage au client de lecture-écriture pour écrire l'instruction de cryptage dans la clé physique NFC par l'intermédiaire du client de lecture-écriture ; et
une génération (404) de secondes informations de clé secrète correspondant au second identifiant de clé et à la seconde clé secrète de service et un envoi des secondes informations de clé secrète au terminal de véhicule à synchroniser à la liste blanche du module de sécurité NFC dans le véhicule, dans lequel les secondes informations de clé secrète incluent les premières informations d'autorisation.

7. Procédé selon la revendication 1, dans lequel les secondes informations d'autorisation incluent un ou plusieurs éléments parmi ce qui suit :
une autorisation de déverrouillage de véhicule, une autorisation de verrouillage de véhicule, une autorisation de démarrage de véhicule, une autorisation de charge CC, une autorisation de charge CA, une autorisation d'activation de conduite autonome, une autorisation de désactivation de conduite autonome, une autorisation d'activation de conduite assistée, et une autorisation de désactivation de conduite assistée.

8. Appareil de commande pour une clé de véhicule, dans lequel l'appareil interagit avec un terminal d'utilisateur (201), un terminal de véhicule (203), et une plateforme de fournisseur de service (202), le terminal d'utilisateur est déployé avec une première application correspondant à la plateforme de fournisseur de service, et l'appareil inclut :
un module de détermination d'informations d'autorisation (501) configuré pour, à réception d'une demande de commande d'autorisation envoyée par la première application, déterminer un identifiant de clé correspondant à la demande de commande d'autorisation et de secondes informations d'autorisation correspondant à l'identifiant de clé, dans lequel de premières informations d'autorisation correspondant à l'identifiant de clé sont stockées dans une liste blanche d'un module de sécurité NFC du terminal de véhicule ;
un module d'organisation d'instructions de commande d'autorisation (502), configuré pour générer une instruction de commande d'autorisation sur la base de l'identifiant de clé et des secondes informations d'autorisation ; et
un module de mise à jour d'autorisation (503), configuré pour envoyer l'instruction de commande d'autorisation au terminal de véhicule d'utiliser les secondes informations d'autorisation pour mettre à jour les premières informations d'autorisation dans le module de sécurité NFC du terminal de véhicule, dans lequel l'utilisation des secondes informations d'autorisation pour mettre à jour les premières informations d'autorisation comprend un repérage des premières informations d'autorisation dans des informations de jeton correspondant à l'identifiant de clé dans la liste blanche du module de sécurité NFC et un remplacement des premières informations d'autorisation dans les informations de jeton avec les secondes informations d'autorisation.

9. Appareil selon la revendication 8, dans lequel le module de détermination d'informations d'autorisation comprend :
un sous-module de détermination de numéro de clé, configuré pour déterminer un numéro de clé à partir de la demande de commande d'autorisation ; et
un sous-module de repérage d'identifiant de clé, configuré pour rechercher un identifiant de clé correspondant au numéro de clé dans une liste pré-enregistrée d'informations de clé.

10. Appareil selon la revendication 8 ou 9, dans lequel la clé de véhicule inclut une clé virtuelle NFC, et l'identifiant de clé correspond à une clé virtuelle NFC, et l'appareil comprend en outre :
un module de réception de demande de partage de clé virtuelle, configuré pour recevoir une demande de partage de clé virtuelle envoyée par la première application pour un terminal récepteur ;
un module de génération de première clé secrète de service, configuré pour déterminer de premières informations de clé correspondant à la demande de partage de clé virtuelle et un numéro d'identification de véhicule correspondant au terminal de véhicule, et pour générer une première clé secrète de service correspondant aux premières informations de clé et au numéro d'identification de véhicule, dans lequel les premières informations de clé secrète incluent un premier identifiant de clé ;
un module de génération de premières informations de clé secrète, configuré pour générer de premières informations de clé secrète correspondant au premier identifiant de clé et à la première clé secrète de service, dans lequel les premières informations de clé secrète incluent les premières informations d'autorisation ; et
un module d'activation de première clé, configuré pour envoyer de premières informations de clé secrète au terminal de véhicule à synchroniser à la liste blanche du module de sécurité NFC dans le terminal de véhicule, et pour écrire la première clé secrète de service dans la puce de cryptage NFC du terminal récepteur.

11. Appareil selon la revendication 10, dans lequel l'appareil interagit en outre avec une plateforme d'émetteur d'élément sécurisé, et le terminal récepteur est déployé avec une deuxième application correspondant à la plateforme de fournisseur de service et une troisième application correspondant à la plateforme d'émetteur d'élément sécurisé ;
la demande de partage de clé virtuelle est une demande générée par la première application sur la base d'une clé virtuelle NFC sélectionnée et/ou d'un numéro d'identification de véhicule saisi, et d'informations de terminal récepteur saisies ; et
le module d'activation de première clé inclut :
un sous-module d'écriture de première clé secrète de service, configuré pour écrire la première clé secrète de service dans la puce de cryptage NFC du terminal récepteur par le biais de la plateforme d'émetteur d'élément sécurisé et de la troisième application.

12. Appareil selon la revendication 11, dans lequel le module de génération de première clé secrète de service comprend :
un sous-module d'écriture de premier identifiant de clé, configuré pour générer le premier identifiant de clé correspondant au terminal récepteur, et pour écrire le premier identifiant de clé dans la puce de cryptage NFC du terminal récepteur par l'intermédiaire de la plateforme d'émetteur d'élément sécurisé et la troisième application ; et
un sous-module d'acquisition de premier identifiant de clé, configuré pour acquérir le premier identifiant de clé correspondant au terminal récepteur par l'intermédiaire de la deuxième application en réponse à la demande de partage de clé virtuelle.

13. Appareil selon la revendication 8 ou 9, dans lequel la clé de véhicule inclut une clé physique NFC, et l'identifiant de clé correspond à une clé physique NFC, l'appareil comprend en outre :
un module de réception de demande de génération de seconde clé secrète, configuré pour recevoir une demande de génération de seconde clé secrète envoyée par un client de lecture-écriture, dans lequel la demande de génération de seconde clé secrète inclut de secondes informations de clé correspondant à la clé physique NFC et le numéro d'identification de véhicule correspondant au terminal de véhicule ;
un module de génération de seconde clé secrète de service, configuré pour générer une seconde clé secrète de service correspondant aux secondes informations de clé et au numéro d'identification de véhicule, dans lequel les secondes informations de clé incluent un second identifiant de clé correspondant à la clé physique NFC ;
un module d'envoi d'instruction de cryptage, configuré pour assembler le second identifiant de clé et la seconde clé secrète de service dans une instruction de cryptage, et envoyer l'instruction de cryptage au client de lecture-écriture pour écrire l'instruction de cryptage dans la clé physique NFC par l'intermédiaire du client de lecture-écriture ; et
un module d'activation de seconde clé, configuré pour générer de secondes informations de clé secrète correspondant au second identifiant de clé et à la seconde clé secrète de service et envoyer les secondes informations de clé secrète au terminal de véhicule à synchroniser à la liste blanche du module de sécurité NFC dans le véhicule, dans lequel les secondes informations de clé secrète incluent les premières informations d'autorisation.

14. Véhicule, comprenant un processeur, un dispositif de mémoire, et un programme informatique exécutable stocké sur le dispositif de mémoire, dans lequel le programme informatique, lorsqu'il est exécuté par le processeur, résulte en la réalisation du procédé de commande pour une clé de véhicule selon l'une quelconque des revendications 1 à 7.

15. Support de stockage lisible par ordinateur, stockant sur lui un programme informatique qui, lorsqu'il est exécuté par le processeur, résulte en la réalisation du procédé de commande pour une clé de véhicule selon l'une quelconque des revendications 1 à 7.
